**Europäisches Patentamt**

**European Patent Office**

**Office européen des brevets**

(19)

(11) Veröffentlichungsnummer: **0 051 725**
**A1**

(12) # EUROPÄISCHE PATENTANMELDUNG

(21) Anmeldenummer: **81107387.3**

(22) Anmeldetag: **18.09.81**

(51) Int. Cl.³: **H 04 L 5/06,** H 04 L 5/14,
H 04 L 25/49

(30) Priorität: **12.11.80 DE 3042612**

(43) Veröffentlichungstag der Anmeldung: **19.05.82**
**Patentblatt 82/20**

(84) Benannte Vertragsstaaten: **AT CH DE FR GB LI NL SE**

(71) Anmelder: **Licentia Patent-Verwaltungs-GmbH,
Theodor-Stern-Kai 1, D-6000 Frankfurt/Main 70 (DE)**

(72) Erfinder: **Schmack, Hans-Jürgen, Ing. grad.,
Wunnensteinstrasse 3, D-7151 Allmersbach i.T. (DE)**

(74) Vertreter: **Schickle, Gerhard, Dipl.-Ing. et al, Licentia
Patent-Verwaltungs-GmbH Theodor-Stern-Kai 1,
D-6000 Frankfurt/Main 70 (DE)**

(54) **Übertragungsverfahren für digitale Signale.**

(57) Die Erfindung betrifft ein Verfahren zur Übertragung digitaler Signale über einen Weg mit einem Frequenzübertragungsbereich, dessen obere Grenzfrequenz der maximalen Bitrate entspricht und ist dadurch gekennzeichnet, daß gleichzeitig digitale Signale mit unterschiedlichen Bitraten derart übertragen werden, daß für die Übertragung von digitalen Signalen mit hoher Bitrate der obere Teil des Frequenzübertragungsbereichs und für solche mit kleiner Bitrate der untere Teil des Frequenzübertragungsbereichs vorgesehen sind.

EP 0 051 725 A1

- 1 -

Licentia Patent-Verwaltungs-GmbH          NE2-BK/Ruf/wei
Theodor-Stern-Kai 1                       BK 80/117
D-6000 Frankfurt 70

Übertragungsverfahren für digitale Signale

Die Erfindung betrifft ein Verfahren zur Übertragung digitaler Signale gemäß Oberbegriff des Hauptanspruchs.

Solche Verfahren sind bekannt als Gleichstromtelegrafie
oder Gleichstromdatenübertragung beispielsweise mit Niedrigpegel.

Bei der Gleichstromtelegrafie ist es bekannt mittels Differenz- bzw. Brückenschaltungen ein Gegenschreibverkehr zu
ermöglichen. Dieser Gegenschreibverkehr ist jedoch auf kleinere Übertragungsbitraten beschränkt. Für hohe Übertragungsbitraten werden Differenz- bzw. Brückenschaltungen sehr aufwendig und für sehr hohe Bitraten ist ein Gegenschreibverkehr
praktisch unmöglich.

Für Gegenschreiben ist deshalb im allgemeinen ein Zusatzübertragungsweg beispielsweise mittels 4-Drahtbetrieb notwendig.

Die Erfindung hat es sich deshalb zur Aufgabe gesetzt, ein Übertragungsverfahren der obigen Art anzugeben, das unter Ausnutzung der durch die Grenzfrequenz gegebenen maximalen Bitrate zusätzlich die Übertragung eines weiteren digitalen Signales mit kleinerer Bitrate gestattet. Außerdem soll das Verfahren möglichst unaufwendig sein.

Die Aufgabe wird gelöst mit den in den Patentansprüchen gegebenen Mitteln.

Durch die erfindungsgemäße Lösung ist es möglich, unter Ausnutzung der höchstmöglichen Bitrate, die durch die obere Grenzfrequenz des Übertragungsweges vorgegeben ist, eine zusätzliche Übertragung eines digitalen Signales mit kleinerer Bitrate in unaufwendiger Weise zu ermöglichen.

Die Erfindung beruht auf der Erkenntnis, daß es zur Übertragung digitaler Signale nicht zwingend notwendig ist, alle Frequenzen des Übertragungsbereiches bis zur oberen Grenzfrequenz zu übertragen, sondern, daß es zur sicheren Erkennung der übertragenen Zeichen genügt, allein einen oberen Teil des Übertragungsbereichs zur Verfügung zu stellen. Bestimmte Codes, z.B. der Amicode, enthalten gar keinen Gleichstromanteil, und die Anteile der niederen Frequenzen am Leistungsspektrum ist sehr gering. Die erfinderische Idee bestand deshalb darin, eine Frequenzlücke im unteren Übertragungsbereich zu schaffen und darin ein digitales Signal mit kleiner Bitrate unterzubringen.

In einer Ausgestaltung der Erfindung werden die digitalen Signale der hohen bzw. der niedrigen Bitrate jeweils über entsprechende Pässe an den Übertragungsweg angeschlossen.

Eine optimale Anwendung der Erfindung besteht in der Anwendung in integrierten Breit- und Schmalbandverteilnetzen, beispielsweise in Bildfernsprech- und Fernsehverteilnetzen, bei denen in günstiger Weise Fernsehprogramme mittels der digitalen Signale mit kleiner Bitrate in der Rückrichtung ausgewählt bzw. angefordert werden können.

In integrierten Breitbandglasfaserortsnetzen kann das Verfahren vorteilhaft auf der unteren Verteilebene, bei der
zwischen den Teilnehmern und den Endstellen der optischen
Übertragungswege Koaxialleitungen vorgesehen sind, eingesetzt werden.

- 1 -

Licentia Patent-Verwaltungs-GmbH          NE2-BK/Ruf/wei
Theodor-Stern-Kai 1                       BK 80/117
D-6000 Frankfurt 70


Patentansprüche


1. Verfahren zur Übertragung digitaler Signale über einen Weg mit einem Frequenzübertragungsbereich, dessen obere Grenzfrequenz der maximalen Bitrate entspricht, dadurch gekennzeichnet, daß gleichzeitig digitale Signale mit unterschiedlichen Bitraten derart übertragen werden, daß für die Übertragung von digitalen Signalen mit hoher Bitrate der obere Teil des Frequenzübertragungsbereichs und für solche mit kleiner Bitrate der untere Teil des Frequenzübertragungsbereichs vorgesehen sind.

2. Verfahren nach Anspruch 1, dadurch gekennzeichnet, daß die digitalen Signale hoher Bitrate so codiert werden, daß sich ihr Leistungsspektrum größtenteils nur im oberen Teil des Frequenzübertragungsbereichs befindet.

3. Verfahren nach einem der vorhergehenden Ansprüche, dadurch gekennzeichnet, daß der obere und untere Teil des Frequenzübertragungsbereichs mittels Pässen gefiltert werden.

4. Verfahren nach einem der vorhergehenden Ansprüche, dadurch gekennzeichnet, daß die digitalen Signale mit kleiner Bitrate in der Rückrichtung übertragen werden.

5. Verfahren nach einem der vorhergehenden Ansprüche, gekennzeichnet durch die Anwendung in integrierten Breit- und
Schmalbandverteilnetzen.

6. Verfahren nach einem der vorhergehenden Ansprüche mit Ausnahme von Anspruch 4, dadurch gekennzeichnet, daß die digitalen Signale in Hin- bzw. Rückrichtung nach dem Zeitga-
bel-Burstverfahren übertragen werden.

0051725

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | US - A - 3 601 544 J.V. MURPHY) <br><br> * Spalte 1, Zeile 66 - Spalte 2, Zeile 66; Figuren 1-3 * <br><br> -- | 1-6 |
| Y | DE - B - 1 166 249 (INT. STANDARD ELECTRIC CORP.) <br><br> * Spalte 2, Zeile 35 - Spalte 3, Zeile 28; Spalte 4, Zeilen 4-8 * <br><br> -- | 1-6 |
| Y | NTZ, Band 33, Heft 10, Oktober 1980, Seiten 646-652 <br> Berlin, DE. <br> H. BESIER: "Der Übergang zum digitalen Ortsnetz" <br><br> * Seite 647, mittel Spalte, Zeile 32 - Seite 648, linke Spalte, Zeile 46; Seite 650, rechte Spalte, Zeilen 1-22 * <br><br> -- | 5,6 |
| PX | US - A - 4 273 955 (ARMSTRONG) <br><br> * Spalte 2, Zeilen 18-27; Spalte 3, Zeilen 22-49; Spalte 3, Zeile 67 - Spalte 4, Zeile 6; Figuren 1-3 * <br><br> ---- | 1 |

**KLASSIFIKATION DER ANMELDUNG (Int. Cl.³)**

H 04 L 5/06
5/14
25/49

**RECHERCHIERTE SACHGEBIETE (Int. Cl.³)**

H 04 L 5/06
5/14
25/49

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-02-1982 | STRASSEN |